# EUROPÄISCHE PATENTSCHRIFT

(11) **EP 3 454 158 B1**
(45) Veröffentlichungstag und Bekanntmachung des Hinweises auf die Patenterteilung: **26.01.2022**
(21) Anmeldenummer: 18189895.8
(22) Anmeldetag: 21.08.2018
(51) Int. Cl.: G05D 1/02, G06K 9/00

(54) **VERFAHREN UND VORRICHTUNG ZUR NAVIGATION EINES FLURFÖRDERZEUGS**
METHOD AND DEVICE FOR NAVIGATION OF AN INDUSTRIAL TRUCK
PROCÉDÉ ET DISPOSITIF DE NAVIGATION D'UN CHARIOT DE MANUTENTION

(30) Priorität: 12.09.2017 DE 102017121000
(43) Veröffentlichungstag der Anmeldung: 13.03.2019
(73) Patentinhaber: STILL GmbH, 22113 Hamburg (DE)
(72) Erfinder: SCHÜTHE, Dennis, 21255 Tostedt (DE); ABEL, Bengt, 21335 Lüneburg (DE)
(74) Vertreter: Patentship Patentanwaltgesellschaft

(56) Entgegenhaltungen:
- CA-A1- 3 016 014
- US-A1- 2001 036 293
- US-A1- 2011 010 023
- US-A1- 2013 096 735
- US-A1- 2015 347 840
- US-B1- 9 488 984
- SAMI MUHAMMAD ET AL: "Text Detection and Recognition for Semantic Mapping in Indoor Navigation", 2015 5TH INTERNATIONAL CONFERENCE ON IT CONVERGENCE AND SECURITY (ICITCS), IEEE, 24. August 2015 (2015-08-24), Seiten 1-4, XP032791803, DOI: 10.1109/ICITCS.2015.7293024 [gefunden am 2015-10-05]

## Beschreibung

Die Erfindung betrifft ein Verfahren zur Navigation eines Flurförderzeugs, bei dem mit einem optischen Sensor Informationen im Betriebsbereich des Flurförderzeugs erkannt werden und von einer Datenverarbeitungseinrichtung dieser Informationen ausgewertet werden und Navigationsanweisungen und/oder Steuerungsbefehle zur Navigation des Flurförderzeugs erstellt werden, wobei von dem optischen Sensor für Menschen vorgesehene und sichtbare, im Betriebsbereich des Flurförderzeugs für Betriebspersonen angebrachte Informationen erfasst werden und von der Datenverarbeitungseinrichtung mittels Kontexterkennung daraus die Navigationsanweisungen und/oder Steuerungsbefehle zur Navigation erstellt werden, wobei von dem optischen Sensor als für Menschen vorgesehene und sichtbare Fußwegmarkierungen und Fahrbahnlinien ausgebildete Bodenmarkierungen im Betriebsbereich des Flurförderzeugs erfasst werden und von der Datenverarbeitungseinrichtung diese kategorisiert werden und daraus die Navigationsanweisungen und/oder Steuerungsbefehle zur Navigation erstellt werden.

Beim Betrieb von Flurförderzeugen kommen vermehrt Navigationssysteme zum Einsatz, die einen automatisierten oder teilautomatisierten Betrieb ermöglichen sollen. Da Flurförderzeuge meistens in definierten Betriebsbereichen, z.B. in Warenlagern, eingesetzt werden, können hierfür ortsbezogene Navigationssysteme genutzt werden. Dabei werden im Warenlager beispielsweise Zeichen, Linien und Schilder oder auch Barcodes und Funkstationen zur Übermittlung von Identifikationssignalen (Funkbeacons) angebracht. Diese Informationen sind aber nur abrufbar, wenn sie in ein Managementsystem für den Betrieb des Flurförderzeugs eingetragen werden. Das Flurförderzeug kann über einen Sensor, z.B. einem optischen Sensor, diese Informationen erfassen und mittels einer Datenverarbeitungseinrichtung mit den Eintragungen im Managementsystem vergleichen. Auf diese Weise ist eine erleichterte manuelle oder automatische Navigation des Flurförderzeugs im Warenlager möglich.

Beispielsweise ist in der EP 2 711 880 A1 ein fahrerloses Transportsystem beschrieben, bei dem Markierungen, z.B. Reflexionselemente, eingesetzt werden, die mittels optischer Sensoren, insbesondere Lasersensoren, gut abgetastet werden können. Diese Markierungen werden genutzt, um eine Navigation im Warenlager zu ermöglichen. Hierzu werden die Koordinaten des Warenlagers als Referenzdaten in der Datenverarbeitungseinrichtung hinterlegt. Die Transportfahrzeuge erkennen die Markierungen und führen einen Abgleich der aktuellen Koordinaten (Ist-Position) des Transportfahrzeuges mit den in der Datenverarbeitungseinrichtung hinterlegten Referenzdaten des Warenlagers durch. So können die Transportfahrzeuge automatisch zu einer Zielposition (Soll-Position) für die Kommissionierung der nächsten Ware verfahren werden. Als Markierungen können auch Barcodes oder Quick-Response-Codes (QR-Codes) eingesetzt werden, die von einer optosensorische Erfassungseinheit, beispielsweise einer Kamera, erfasst werden können.

Bisherige ortsbezogene Navigationssysteme haben den Nachteil, dass immer an zwei Stellen eingegriffen werden muss, im Warenlager selbst durch Anbringung von Markierungen, Zeichen, Linien, Schildern etc. und im Managementsystem durch Eintragung dieser Informationen. Dies ist selbstverständlich sehr fehleranfällig.

Außerdem ist bei Auslegung eines Warenlagers auf fahrerlosen Betrieb der Flurförderzeuge ein manueller Betrieb nur erschwert möglich, weil die hierfür notwendigen sichtbaren Markierungen oft nicht in genügendem Ausmaß vorhanden sind. Andererseits fehlen bei einer Auslegung des Warenlagers auf manuellen Betrieb in der Regel die für den automatisierten Betrieb notwendigen, für das autonome Flurförderzeug erkennbaren Informationen. Ein Mischbetrieb ist daher bisher kaum möglich.

Die US 2011/010023 A1 offenbart ein Verfahren zur Navigation eines Flurförderzeugs, bei dem mit einer Kamera Positionsmarken erkannt werden und in einer Datenverarbeitungseinrichtung die in den Positionsmarken enthaltenen Informationen ausgewertet werden und entsprechenden Steuerungsbefehle zur Navigation des Flurförderzeugs erzeugt werden. Die Positionsmarken umfassen entsprechende maschinenlesbare Barcodemarkierungen, die Linienbarcodes oder QR-Codes sein können. Die Barcodemarkierungen enthalten in codierter Form eine Positionsinformation. Die Positionsmarken enthalten weiterhin dieselbe Positionsinformation in Klartext für eine Bedienperson. Für die Navigation des Flurförderzeugs werden nur die maschinelesbaren Barcodemarkierungen der Positionsmarken verwendet und deren Positionsinformation dekodiert. Die Textinformationen der Positionsmarken dienen rein einer Bedienperson und sind somit zusätzlich für eine Bedienperson vorhanden, werden aber von dem Navigationssystem des Flurförderzeugs nicht ausgewertet.

Die US 2013/096735 A1 offenbart ein gattungsgemäßes Verfahren zur Navigation eines Flurförderzeugs, bei dem mit einer Kamera Positionsmarken erfasst werden, die an vertikalen Regalstützen eines Regals angebracht sind. Die Positionsmarken enthalten Informationen zur Regalgasse ("aisle number indicia") und zum Regalplatz ("slot number indicia"). Die Positionsmarken sind als Zahlen in Klartext ausgeführt und somit als für Menschen sichtbare und angebrachte Informationen. Von der Kamera werden die Positionsmarken erfasst und daraus die entsprechenden Informationen ("aisle number", "slot number") mittels Zeichenerkennung ermittelt. Die Informationen ("aisle number", "slot number") dienen dazu, das Flurförderzeug an den nächsten Pickort autonom zu navigieren.

Aus der US 9 488 984 B1 ist ein Navigationsverfahren für ein autonomes Flurförderzeug bekannt, bei dem auch Bodenmerkmale/Bodeneigenschaften für die Navigation verwendet werden.

Die US 2015/347840 A1 offenbart ein autonomes Flurförderzeug, bei dem mit einer Kamera die Einfahröffnungen einer aufzunehmenden Palette erfasst werden.

In dem Artikel von Sami Muhammed et all: "Text Detection and Recognition for Semantic Mapping in Indoor Navigation" , 2015, 5TH International Conference on IT Convergence and Security (ICITCS), IEEE, 24. August 2015, Seiten 1-4, XP032791803, DOI: 10.1109/ICITCS.2015.7293024 ist ein Navigationsverfahren für Roboter beschrieben, bei dem für die Navigation bereits in einem Gebäude vorhandene Schilder mit Beschriftungen verwendet werden und der Textinhalt der Schilder erkannt wird.

Die CA 3 016 014 A1 offenbart auf einer Fahrbahnoberfläche des öffentlichen Straßenverkehrs angebrachte Markierungen, die von Menschen und Fahrzeugsensoren lesbar sind.

Die US 2001/036293 A1 offenbart ein System zur automatischen Generierung einer Datenbank von Objekten.

Der vorliegenden Erfindung liegt die Aufgabe zugrunde, ein Verfahren der eingangs genannten Art so auszugestalten, dass auch ein Mischbetrieb von manuell betriebenen und automatisch betriebenen Flurförderzeugen ermöglicht wird.

Diese Aufgabe wird erfindungsgemäß dadurch gelöst, dass ein erkannter Kontext in Karten abgespeichert wird, die in Relation zu vorhandenen Informationen bezüglich des Betriebsbereichs des Flurförderzeugs gebracht werden.

Die Karten können vorteilhafterweise regelmäßig adaptiert werden, um auf neue Situationen reagieren zu können. Dabei kann eine anfängliche Karte durch Explorationsfahrten und/oder Kommunikation mit anderen Flurförderzeugen und/oder Robotern und/oder durch Abstimmung mit einem übergeordneten Betriebsmanagementsystem generiert und abgespeichert werden.

Bekannte Navigationsverfahren für Flurförderzeuge benutzen künstliche oder natürliche Landmarken, z.B. Markierungen, Reflexstreifen, Wände etc.. Für die Erfassung dieser Landmarken kommen sowohl Laserscanner als auch Kameras zum Einsatz. Dabei wird aber nur die Position des Flurförderzeugs zur Landmarke bewertet, nicht die Bedeutung der Landmarke. Die bisherigen Verfahren basieren also nicht auf dem Kontext der Landmarken, sondern nur auf deren Anordnung im Raum.

Das erfindungsgemäße Verfahren baut dagegen auf dem Kontextwissen auf, so dass sich das Flurförderzeug durch die natürliche Umgebung bewegen kann. Die Erfindung hebt sich dabei von rein automatisierten Lösungen ab, da mit dem erfindungsgemäßen Verfahren im Gegensatz zu diesen Lösungen ein Mischbetrieb im Warenlager möglich ist. Die für einen manuellen Betrieb bereits für den Menschen (Betriebspersonen) vorgesehenen und angebrachten Schilder, Markierungen und Signale werden durch das erfindungsgemäße Verfahren genutzt, um damit zu navigieren.

Der Erfindung liegt die Erkenntnis zu Grunde, dass die in Warenlagern ohnehin vorhandenen, für Menschen (Betriebspersonen) vorgesehenen und sichtbaren (natürlichen) Informationen, z.B. Bodenmarkierungen, Verkehrsschilder, Warnhinweise etc., mit den Verfahren nach dem beschriebenen Stand der Technik nicht inhaltlich ausgewertet werden können. Durch die erfindungsgemäße Erfassung und Verarbeitung dieser natürlichen Informationen wird die Anbringung spezieller Markierungen und deren Eintragung ins Managementsystem überflüssig. Ein doppelter Eingriff mit der damit verbundenen Fehleranfälligkeit wird so vermieden.

Dabei basiert die Erfindung auf der Überlegung, dass sich das Flurförderzeug durch die natürliche Umgebung bewegt und die Informationen erfasst und ausgewertet werden, die vorgefunden werden. Eine Installation eigens für das Navigationssystem vorgesehener Markierungen etc. und deren Hinterlegung im Managementsystem ist nicht mehr erforderlich.

Ein optischer Sensor erfasst für Menschen vorgesehene und sichtbare als Fußwegmarkierungen und Fahrbahnlinien ausgebildete Bodenmarkierungen im Betriebsbereich des Flurförderzeugs. Die Datenverarbeitungseinrichtung kategorisiert diese und erstellt daraus die Navigationsanweisungen und/oder Steuerungsbefehle. Mit der Erfindung werden bestehende Markierungen, zum Beispiel auf dem Boden aufgetragene Linien, erkannt und kategorisiert. Zum Beispiel werden farbige, beispielsweise gelbe Markierungen üblicherweise für Fußwege genutzt, blaue Linien dienen als Leitlinien für Fahrwege. Auf die vom optischen Sensor erfassten Markierungen wird unterschiedlich reagiert. Beispielsweise dürfen gelbe Fußwegmarkierungen nicht überfahren werden. Sollte das Flurförderzeug dem Fußweg näher kommen als erlaubt, so kann das Flurförderzeug automatisch abgebremst oder gestoppt werden. Mit blauen Linien markierte Fahrwege können hingegen zur Navigation verwendet werden, um darauf eine Strecke zurückzulegen. Die Linien können dabei in einem bestimmten Abstand verfolgt werden.

In einer besonders bevorzugten Ausgestaltung der Erfindung wird als optischer Sensor eine Kamera verwendet. Eine monoculare Kamera genügt für den Zweck der Erfindung. Sofern weitergehende Navigations- und Assistenzaufgaben gewünscht sind, kann auch eine Stereokamera eingesetzt werden, die ein räumliches Sehen erlaubt.

Mit der Kamera kann die Umgebung wahrgenommen werden, wie sie vorgefunden wird. Die Datenverarbeitungseinrichtung kann dann daraus den Kontext herleiten.

Wichtige Kontextmerkmale sind beim Einsatz in Warenlagern z.B. Bodenmarkierungen, Verkehrsschilder, Beschriftungen und Tore.

Eine vorteilhafte Ausgestaltung der Erfindung sieht vor, dass von dem optischen Sensor Verkehrsschilder erfasst werden und von der Datenverarbeitungseinrichtung diese kategorisiert und daraus die Navigationsanweisungen und/oder Steuerungsbefehle erstellt werden. Auf diese Weise können zum Beispiel Einbahnstraßen, Geschwindigkeitsbegrenzungen etc. erkannt werden. Die Navigation wird dann entsprechend angepasst. Beispielsweise wird nicht in der falschen Richtung in Einbahnstraßen gefahren und es wird die vorgeschriebene Geschwindigkeit eingehalten.

Erfindungsgemäß werden von dem optischen Sensor für Menschen vorgesehene und sichtbare Regalbeschriftungen im Bereich von Regalen in einem Warenlager erfasst und von der Datenverarbeitungseinrichtung daraus die Navigationsanweisungen und/oder Steuerungsbefehle zur Navigation erstellt. In einem Warenlager vorhandene Regalbeschriftungen, Hallenbeschriftungen und Regalplatzbeschriftungen können erkannt werden und von der Datenverarbeitungseinrichtung genutzt werden, um das Flurförderzeug global zu lokalisieren. Solche Beschriftungen können zur Navigation herangezogen werden, weil Regalpositionen üblicherweise fest in Karten von Warenlagern (Hallenlayout) hinterlegt sind. Nicht eingetragene Objekte können automatisch nachgetragen werden.

Gemäß einer Weiterbildung des Erfindungsgedankens werden von dem optischen Sensor im Bereich eines Tores angebrachte Informationen bezüglich des Tores erfasst und von der Datenverarbeitungseinrichtung daraus die Navigationsanweisungen und/oder Steuerungsbefehle erstellt. Es handelt sich dabei also um ein System zur Torerkennung. Warenlager weisen meist Tore auf, die normalerweise geschlossen sind und nur zum Durchqueren geöffnet werden. Dies ist zum Beispiel bei Kühllagern wichtig, um Kühlverluste zu vermeiden. Die Positionen dieser Tore im Warenlager können erfindungsgemäß für die Lokalisierung des Flurförderzeugs und dessen Navigation genutzt werden. Dabei ist auch eine automatische Navigation durch das Tor hindurch möglich, da das Flurförderzeug mit dem üblicherweise elektronisch gesteuerten Tor kommunizieren kann und eine automatische Öffnung des Tores bewirkt werden kann.

In einer besonders bevorzugten Ausgestaltung der Erfindung übermittelt die Datenverarbeitungseinrichtung bei Absicht, das Tor zu durchqueren, Anweisungen an die Torsteuerung, das Tor zu öffnen.

Zweckmäßigerweise werden von dem optischen Sensor Markierungen und/oder Beschriftungen im Bereich des Tores erfasst. Durch Auswertung dieser Informationen identifiziert die Datenverarbeitungseinrichtung das Tor und führt einen Abgleich von Daten bezüglich Flurförderzeugabmessungen, insbesondere Flurförderzeughöhe, und Torabmessungen, insbesondere Torhöhe durch. Bei Absicht, das Tor zu durchqueren, werden Anweisungen an die Torsteuerung übermittelt, das Tor gezielt nur bis zur erforderlichen Höhe zu öffnen, um gerade noch ein Durchqueren des Flurförderzeugs zu ermöglichen.

Mittels der erfindungsgemäßen Torerkennung kann also das Tor, bei Absicht das Tor zu durchqueren, automatisch geöffnet werden. Bei zu geringen Torhöhen für das Flurförderzeug kann gewarnt werden und in Notsituationen in den Betrieb des Flurförderzeugs eingegriffen werden, um dieses in einen sicheren Zustand zu bringen. Beispielsweise kann das Flurförderzeug vor dem Tor gestoppt oder ausgewichen werden. Es können Markierungen auf dem Boden vor dem Tor bzw. Beschriftungen an dem Tor genutzt werden, um die Tore eindeutig zu erkennen. Somit können Tore gezielt geöffnet werden und Torhöhe und Flurförderzeug abgeglichen werden. Das Tor muss also nur so weit geöffnet werden, wie für das Durchqueren notwendig ist. Insbesondere in Kühllagern können auf diese Weise unerwünschte Kühlverluste vermieden werden.

Bevorzugt wird von der Datenverarbeitungseinrichtung zur Kontexterkennung mindestens eine der folgenden Bildverarbeitungsalgorithmen genutzt: Hough-Transformation, RANSAC, Korrelation, SIFT, FLANN. Die Hough-Transformation ist ein Verfahren zur Erkennung von Geraden, Kreisen oder beliebigen anderen parametrisierbaren geometrischen Figuren in einem binären Gradientenbild, also einem Schwarz-Weiß-Bild, nach einer Kantenerkennung. Unter RANSAC (englisch random sample consensus, deutsch etwa "Übereinstimmung mit einer zufälligen Stichprobe") versteht man einen Algorithmus zur Schätzung eines Modells innerhalb einer Reihe von Messwerten mit Ausreißern und groben Fehlern. Korrelation wird zur Bestimmung von Ähnlichkeiten eingesetzt. Scale-invariant feature transform (engl., "skaleninvariante Merkmalstransformation", kurz SIFT) ist ein Algorithmus zur Detektion und Beschreibung lokaler Merkmale in Bildern. FLANN (library for performing fast approximate nearest neighbor) ist eine Methode zur Ermittlung von benachbarten Elementen in mehrdimensionalen Räumen.

Mit Vorteil wird von der Datenverarbeitungseinrichtung zur Kontexterkennung auch mindestens eine der folgenden lernenden Methoden genutzt: deep learning, neuronal networks, machine leaerning, reinforcement learning, supported vector machine. Deep Learning, auf Deutsch etwa tiefgehendes Lernen, bezeichnet eine Klasse von Optimierungsmethoden künstlicher neuronaler Netze, die zahlreiche Zwischenlagen (engl. hidden layers) zwischen Eingabeschicht und Ausgabeschicht haben und dadurch eine umfangreiche innere Struktur aufweisen. Neuronal networks sind Netze aus künstlichen Neuronen in der Neuroinformatik. Unter machine learning versteht man maschinelles Lernen, also die künstliche Generierung von Wissen aus Erfahrung. Verstärkendes Lernen (englisch reinforcement learning) steht für eine Reihe von Methoden des maschinellen Lernens, bei denen ein Agent selbständig eine Strategie erlernt, um erhaltene Belohnungen zu maximieren. Eine Support Vector Machine dient zur Klassifizierung von Objekten.

Weitere Vorteile und Einzelheiten der Erfindung werden anhand der in den schematischen Figuren dargestellten Ausführungsbeispiele näher erläutert. Hierbei zeigt
- Figur 1: die Erkennung von Bodenmarkierungen in einem Warenlager,
- Figur 2: die Erkennung von Lagerplätzen auf dem Boden,
- Figur 3: die Erkennung von Regalplätzen,
- Figur 4: die Erkennung von Lagerplätzen und deren Außenmarkierungen,
- Figur 5: die Erkennung von Regalgangsnummern und
- Figur 6: die automatische Torerkennung und Toröffnung.

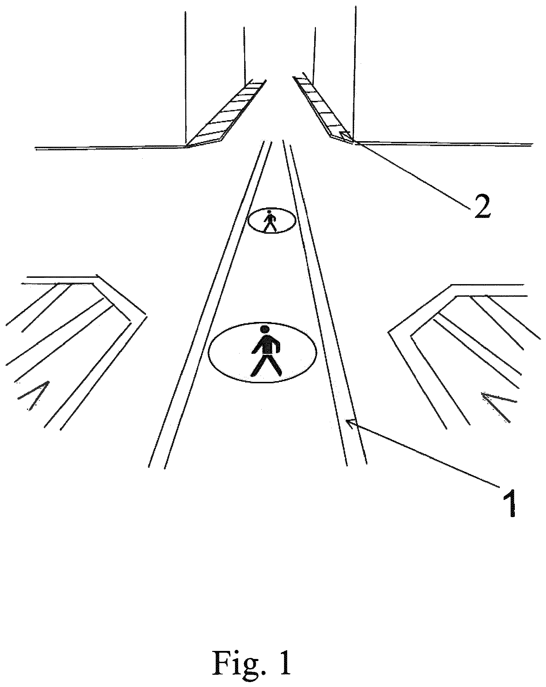

In Figur 1 sind Bodenmarkierungen 1, 2 in einem Warenlager dargestellt. Die Markierung 1 wird für Fußwege genutzt und darf in der Regel von einem Flurförderzeug nicht überquert werden. Außerdem sind noch Markierungen 2 gezeigt, die als Fahrbahnlinien Fahrwege seitlich begrenzen. Die bestehenden Markierungen 1, 2 werden von der Kamera als optischen Sensor des Flurförderzeugs erfasst und von der Datenverarbeitungseinrichtung des Flurförderzeugs kategorisiert. Auf die gefundenen Markierungen 1, 2 wird unterschiedlich reagiert. Fußwegmarkierungen 1 dürfen nicht überfahren werden. Sollte das Flurförderzeug näher als erlaubt an den Fußweg herankommen, so wird es abgebremst oder gestoppt. Die Fahrbahnlinien 2 können hingegen zur Navigation verwendet werden, um auf den Fahrwegen eine Strecke zurückzulegen. Die Linien werden dabei in einem bestimmten Abstand verfolgt.

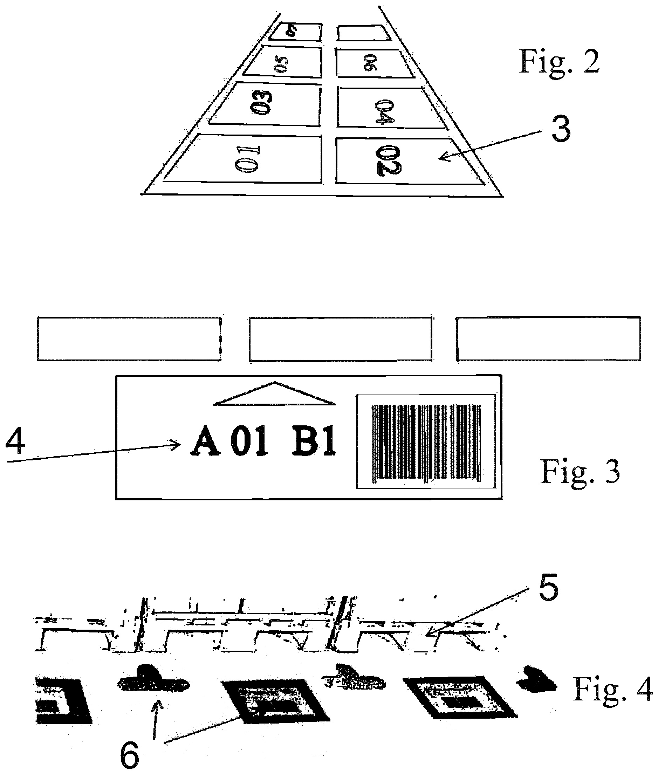

Figur 2 zeigt Bodenmarkierungen 3 von Lagerplätzen in einem Warenlager. Diese können von dem als Kamera ausgebildeten optischen Sensor des Flurförderzeugs erfasst und von der Datenverarbeitungseinrichtung des Flurförderzeugs ausgewertet werden, um eine Lokalisierung des Flurförderzeugs im Warenlager durchzuführen und bestimmte Lagerplätze gezielt anzusteuern.

In Figur 3 sind Beschriftungen 4 von Regalplätzen dargestellt. Diese können ebenfalls zur Lokalisierung des Flurförderzeugs genutzt werden.

In Figur 4 sind Lagerplätze 5 mit Außenmarkierungen 6 gezeigt, die zur Navigation des Flurförderzeugs benutzt werden können.

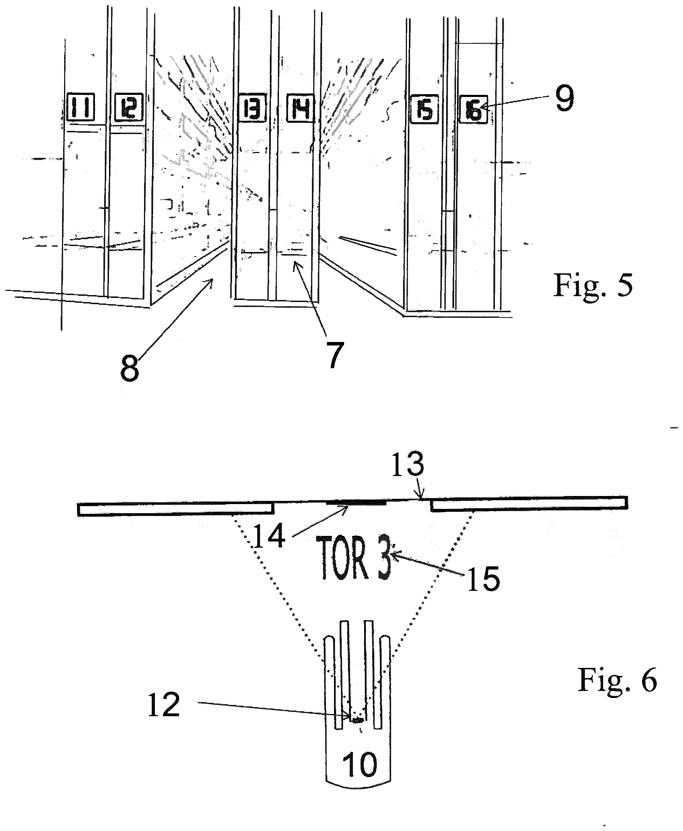

Figur 5 zeigt Regale 7 in einem Warenlager, die Regalgänge 8 bilden. Die Regale 7 sind mit Regalgangsnummern 9 versehen, die ebenfalls zur Navigation herangezogen werden können.

Den in den Figuren 1 bis 5 dargestellten Beschriftungen und Markierungen 1, 2, 3, 4, 6 ist gemeinsam, dass sie vom optischen Sensor des Flurförderzeugs erkannt und von der Datenverarbeitungseinrichtung des Flurförderzeugs ausgewertet werden können. Die Beschriftungen und Markierungen 1, 2, 3, 4, 6 werden erkannt und zur Lokalisierung des Flurförderzeugs im Warenlager genutzt. Da die Regalpositionen in einer Karte des Warenlagers hinterlegt sind, kann die Position des Flurförderzeugs im Warenlager genau bestimmt werden. Auf diese Weise ist eine zielgenaue Navigation durch das Warenlager möglich, so dass Aufträge autonom durchgeführt werden können.

Figur 6 zeigt ein erfindungsgemäßes Flurförderzeug 10 in der Draufsicht. Die Kamera 12 als optischer Sensor des Flurförderzeugs 10 erfasst die Markierungen 15 auf dem Boden vor dem Tor 13 und/oder die Beschriftungen 14 an dem Tor 13. Bei der Absicht, das Tor 13 zu durchqueren, beispielswiese wenn mit dem Flurförderzeug 10 direkt auf das Tor 13 zugefahren wird, wird ein Steuerungsbefehl an eine Steuerungseinrichtung des Tores 13 gesendet, dieses automatisch zu öffnen. Die Markierungen 15 auf dem Boden und/oder die Beschriftungen 14 an dem Tor 13 werden von der Datenverarbeitungseinrichtung des Flurförderzeugs 10 genutzt, um das Tor 13 eindeutig zu erkennen. Somit kann das Tor 13 gezielt geöffnet werden und es können Torhöhe und Höhe des Flurförderzeugs 10 abgeglichen werden. Es wird ein Steuerungsbefehl an das Tor 13 gegeben, das Tor 13 nur so weit zu öffnen, wie es für eine Durchfahrt des Flurförderzeugs 10 erforderlich ist. Bei zu geringer Torhöhe für das Flurförderzeug 10 erstellt die Datenverarbeitungseinrichtung eine Warnmeldung und bringt das Flurförderzeug 10 automatisch zum Stehen. Der Steuerungsbefehl zur Öffnung des Tores 13 wird von der Datenverarbeitungseinrichtung nur dann an das Tor 13 gesendet, wenn das Flurförderzeug 10 auf das Tor 13 zufährt, nicht wenn daran vorbeigefahren wird.

Bei der Erfindung werden bereits vorhandene, für Menschen (Betriebspersonen) vorgesehene und sichtbare (natürliche) Informationen, z.B. Bodenmarkierungen und/oder Verkehrsschilder und/oder Beschriftungen, die in einem Lager angebracht sind, für die Navigation eines autonomen und somit fahrerlos betriebenen Flurförderzeugs 10 genutzt werden. Weiterhin ergeben sich bei der Erfindung eine Verbesserung der globalen Lokalisierung und dadurch eine erhöhte Verfügbarkeit des Flurförderzeugs 10.

## Patentansprüche

1. Verfahren zur Navigation eines Flurförderzeugs (10), bei dem mit einem optischen Sensor (12) Informationen im Betriebsbereich des Flurförderzeugs (10) erkannt werden und von einer Datenverarbeitungseinrichtung diese Informationen ausgewertet werden und Navigationsanweisungen und/oder Steuerungsbefehle zur Navigation des Flurförderzeugs (10) erstellt werden, wobei von dem optischen Sensor (12) für Menschen vorgesehene und sichtbare, im Betriebsbereich des Flurförderzeugs (10) für Betriebspersonen angebrachte Informationen (1, 2) erfasst werden und von der Datenverarbeitungseinrichtung mittels Kontexterkennung daraus die Navigationsanweisungen und/oder Steuerungsbefehle zur Navigation erstellt werden, wobei von dem optischen Sensor (12) für Menschen vorgesehene und sichtbare Regalbeschriftungen (9) im Bereich von Regalen in einem Warenlager erfasst werden und von der Datenverarbeitungseinrichtung daraus die Navigationsanweisungen und/oder Steuerungsbefehle zur Navigation erstellt werden, **dadurch gekennzeichnet, dass** von dem optischen Sensor (12) als für Menschen vorgesehene und sichtbare Fußwegmarkierungen und Fahrbahnlinien ausgebildete Bodenmarkierungen (1, 2) im Betriebsbereich des Flurförderzeugs (10) erfasst werden und von der Datenverarbeitungseinrichtung diese kategorisiert werden und daraus die Navigationsanweisungen und/oder Steuerungsbefehle zur Navigation erstellt werden, und wobei der erkannte Kontext in Karten abgespeichert wird, die in Relation zu vorhandenen Informationen bezüglich des Betriebsbereichs des Flurförderzeugs (10) gebracht werden.

2. Verfahren nach Anspruch 1, **dadurch gekennzeichnet, dass** als optischer Sensor (12) eine Kamera verwendet wird.

3. Verfahren nach Anspruch 1 oder 2, **dadurch gekennzeichnet, dass** von dem optischen Sensor (12) Verkehrsschilder erfasst werden und von der Datenverarbeitungseinrichtung diese kategorisiert werden und daraus die Navigationsanweisungen und/oder Steuerungsbefehle erstellt werden.

4. Verfahren nach einem der Ansprüche 1 bis 3, **dadurch gekennzeichnet, dass** von dem optischen Sensor (12) Beschriftungen (4, 6) im Bereich von Regalen erfasst werden und von der Datenverarbeitungseinrichtung daraus die Navigationsanweisungen und/oder Steuerungsbefehle erstellt werden.

5. Verfahren nach einem der Ansprüche 1 bis 4, **dadurch gekennzeichnet, dass** von dem optischen Sensor (12) im Bereich eines Tores (13) angebrachte Informationen (14, 15) bezüglich des Tores (13) erfasst werden und von der Datenverarbeitungseinrichtung daraus die Navigationsanweisungen und/oder Steuerungsbefehle erstellt werden.

6. Verfahren nach Anspruch 1, **dadurch gekennzeichnet, dass** die Karten regelmäßig adaptiert werden, um auf neue Situationen reagieren zu können.

7. Verfahren nach Anspruch 1 oder 6, **dadurch gekennzeichnet, dass** eine anfängliche Karte durch Explorationsfahrten und/oder Kommunikation mit anderen Flurförderzeugen (10) und/oder Robotern und/oder durch Abstimmung mit einem übergeordneten Betriebsmanagementsystem generiert und abgespeichert wird.

8. Verfahren nach einem der Ansprüche 1 bis 7, **dadurch gekennzeichnet, dass** von der Datenverarbeitungseinrichtung zur Kontexterkennung mindestens eine der folgenden Bildverarbeitungsalgorithmen genutzt wird: Hough-Transformation, Ransac, Korrelation, SIFT, FLANN.

9. Verfahren nach einem der Ansprüche 1 bis 8, **dadurch gekennzeichnet, dass** von der Datenverarbeitungseinrichtung zur Kontexterkennung mindestens eine der folgenden lernenden Methoden genutzt wird: deep learning, neuronal networks, machine leaerning, reinforcement learning, supported vector machine.

## Claims

1. Method for navigating an industrial truck (10), in which pieces of information in the operating region of the industrial truck (10) are recognized with an optical sensor (12), and said pieces of information are evaluated by a data processing device, and navigation instructions and/or control commands for navigating the industrial truck (10) are created, wherein visible pieces of information (1, 2) which are provided for human beings and are mounted for operators in the operating region of the industrial truck (10) are captured by the optical sensor (12), and the navigation instructions and/or control commands are created therefrom by means of context recognition by the data processing device for navigation purposes, wherein visible shelf lettering (9), provided for human beings, in the region of shelves in a warehouse are captured by the optical sensor (12), and the navigation instructions and/or control commands are created therefrom by the data processing device for navigation purposes, **characterized in that** floor markings (1, 2), which are formed as visible footpath markings and lane markings provided for human beings, in the operating region of the industrial truck (10) are captured by the optical sensor (12) and are categorized by the data processing device, and the navigation instructions and/or control commands are created therefrom for navigation purposes, and wherein the recognized context is stored in maps that are placed in relation to existing pieces of information with respect to the operating region of the industrial truck (10).

2. Method according to Claim 1, **characterized in that** a camera is used as the optical sensor (12).

3. Method according to Claim 1 or 2, **characterized in that** traffic signs are captured by the optical sensor (12) and are categorized by the data processing device, and the navigation instructions and/or control commands are created therefrom.

4. Method according to one of Claims 1 to 3, **characterized in that** lettering (4, 6) in the region of shelves is captured by the optical sensor (12) and the navigation instructions and/or control commands are created therefrom by the data processing device.

5. Method according to one of Claims 1 to 4, **characterized in that** pieces of information (14, 15) that have been mounted in the region of a gate (13) and relate to said gate (13) are captured by the optical sensor (12), and the navigation instructions and/or control commands are created therefrom by the data processing device.

6. Method according to Claim 1, **characterized in that** the maps are regularly adapted in order to make it possible to react to new situations.

7. Method according to Claim 1 or 6, **characterized in that** an initial map is generated through exploration tours and/or communication with other industrial trucks (10) and/or robots and/or by agreement with a superordinate operation management system and is stored.

8. Method according to one of Claims 1 to 7, **characterized in that** at least one of the following image processing algorithms is used by the data processing device for context recognition purposes: Hough transform, RANSAC, correlation, SIFT, FLANN.

9. Method according to one of Claims 1 to 8, **characterized in that** at least one of the following learning methods is used by the data processing device for context recognition purposes: deep learning, neural networks, machine learning, reinforcement learning, support vector machine.

## Revendications

1. Procédé de navigation d'un chariot de manutention (10), dans lequel un capteur optique (12) reconnaît des informations dans la zone de fonctionnement du chariot de manutention (10), et un dispositif de traitement de données évalue ces informations et crée des instructions de navigation et/ou des ordres de pilotage pour la navigation du chariot de manutention (10), le capteur optique (12) détectant des informations (1, 2) prévues et visibles pour l'homme, placées dans la zone de fonctionnement du chariot de manutention (10) pour des opérateurs, et le dispositif de traitement de données créant à partir de celles-ci au moyen d'une reconnaissance de contexte les instructions de navigation et/ou les ordres de pilotage pour la navigation, le capteur optique (12) détectant des inscriptions de rayonnage (9) prévues et visibles pour l'homme au niveau de rayonnages dans un entrepôt, et le dispositif de traitement de données créant à partir de celles-ci les instructions de navigation et/ou les ordres de pilotage pour la navigation,
**caractérisé en ce que** le capteur optique (12) détecte des marquages au sol (1, 2) réalisés sous la forme de marquages de chemins piétonniers et de lignes de voie de circulation, prévus et visibles pour l'homme, dans la zone de fonctionnement du chariot de manutention (10), et le dispositif de traitement de données les classe par catégories, et crée à partir de ceux-ci les instructions de navigation et/ou les ordres de pilotage pour la navigation, et le contexte reconnu étant enregistré sur des cartes qui sont mises en relation avec des informations existantes concernant la zone de fonctionnement du chariot de manutention (10).

2. Procédé selon la revendication 1, **caractérisé en ce qu'**une caméra est utilisée comme capteur optique (12) .

3. Procédé selon la revendication 1 ou 2, **caractérisé en ce que** le capteur optique (12) détecte des panneaux de signalisation et le dispositif de traitement de données les classe par catégories et crée à partir de ceux-ci les instructions de navigation et/ou les ordres de pilotage.

4. Procédé selon l'une quelconque des revendications 1 à 3, **caractérisé en ce que** le capteur optique (12) détecte des inscriptions (4, 6) au niveau de rayonnages, et le dispositif de traitement de données crée à partir de celles-ci les instructions de navigation et/ou les ordres de pilotage.

5. Procédé selon l'une quelconque des revendications 1 à 4, **caractérisé en ce que** le capteur optique (12) détecte des informations (14, 15) concernant un portail (13), placées au niveau du portail (13), et le dispositif de traitement de données crée à partir de celles-ci les instructions de navigation et/ou les ordres de pilotage.

6. Procédé selon la revendication 1, **caractérisé en ce que** les cartes sont régulièrement adaptées afin de pouvoir réagir à de nouvelles situations.

7. Procédé selon la revendication 1 ou 6, **caractérisé en ce qu'**une carte initiale est générée et enregistrée par des parcours d'exploration et/ou la communication avec d'autres chariots de manutention (10) et/ou des robots et/ou en coordination avec un système de gestion d'exploitation supérieur.

8. Procédé selon l'une quelconque des revendications 1 à 7, **caractérisé en ce que** le dispositif de traitement de données utilise pour la reconnaissance de contexte au moins l'un des algorithmes de traitement d'image suivants : une transformation de Hough, Ransac, une corrélation, SIFT, FLANN.

9. Procédé selon l'une quelconque des revendications 1 à 8, **caractérisé en ce que** le dispositif de traitement de données utilise pour la reconnaissance de contexte au moins l'une des méthodes d'apprentissage suivantes : un apprentissage profond, des réseaux de neurones, un apprentissage machine, un apprentissage par renforcement, une machine à vecteurs de support.
